# EUROPEAN PATENT APPLICATION

(11) **EP 0 943 371 A2**
(43) Date of publication of application: **22.09.1999**
(21) Application number: 99200853.2
(22) Date of filing: 18.03.1999
(51) Int. Cl.: B02C 19/14

(54) **Apparatus for crushing glass**

(30) Priority: 18.03.1998 NL 1008632
(71) Applicant: Roose, Chrisstoffel Willibrordus Maria, 4461 BG Goes (NL)
(72) Inventor: Roose, Chrisstoffel Willibrordus Maria, 4461 BG Goes (NL)
(74) Representative: Eveleens Maarse, Pieter

(57) **Abstract**

The invention relates to an apparatus for crushing glass, comprising:
- a chamber (14) closable with a cover (15) for enclosing the piece of glass for crushing; and
- a rotatable crushing element arranged in the chamber, wherein: the chamber is substantially cylindrical; the crushing element comprises a disc (10) which is provided with protrusions (11) and the main surface of which extends substantially transversely of the axis of the chamber; the disc (10) is placed on a motor shaft of a motor (7) extending parallel to the axis of the chamber; and the chamber and the motor are accommodated in a substantially cylindrical housing (2), the axis of which extends substantially parallel to the axis of the chamber.

As a result of these measures an apparatus is obtained which can be easily dimensioned for use on domestic scale.

The volume is hereby reduced so that more glass is returned via recycling.

## Description

The invention relates to an apparatus for crushing glass, comprising:
- a chamber closable with a cover for enclosing the piece of glass for crushing; and
- a rotatable crushing element arranged in the chamber.

Such apparatus are known for crushing glass in the professional field, for instance on catering premises.

Much glass is used for packaging drinks and food products. A large part of the glass left over after emptying cannot be returned and must therefore be disposed of. Disposal of this voluminous glass requires a great deal of effort.

Such glass crushing apparatus, specifically intended for the professional market, are available for this purpose.

The same problem also occurs in households. Much glass is also left over in the household which has been obtained without payment of a deposit and which cannot be returned.

It is therefore intended that such glass be placed in the glass containers arranged for the purpose of disposal of glass. Packaging glass is generally quite bulky, so that a large volume of glass has to be taken to the glass container after only a short time, which is perceived by many users as inconvenient. Some of the glass is therefore still disposed of via the household refuse.

The object of the present invention is to provide an apparatus with which glass can be crushed and which is particularly suitable for household applications.

This objective is achieved with such an apparatus wherein: the chamber is substantially cylindrical; the crushing element comprises a disc which is provided with protrusions and the main surface of which extends substantially transversely of the axis of the chamber; the disc is placed on a motor shaft of a motor extending parallel to the axis of the chamber; and the chamber and the motor are accommodated in a substantially cylindrical housing, the axis of which extends substantially parallel to the axis of the chamber.

As a result of these measures an apparatus is obtained which can be easily dimensioned for use on domestic scale.

The volume is hereby reduced so that more glass is returned via recycling.

It will be apparent that in the case of household use glass also becomes available in different colours, particularly clear, green and brown glass. In order to obtain a separation between clear, green and brown glass fragments, in a preferred embodiment according to the present invention the outlet opening of a funnel, via which the glass fragments are discharged, is displaceable to a position above different containers.

According to a specific embodiment the funnel has an out-of-centre outlet opening, an assembly of at least two receiving containers is placed under the funnel and the funnel or the assembly of receiving containers is arranged rotatably in the housing. A compact construction is thus still achieved while an effective separation is ensured.

The present invention will be elucidated hereinbelow with reference to the annexed drawings, in which:

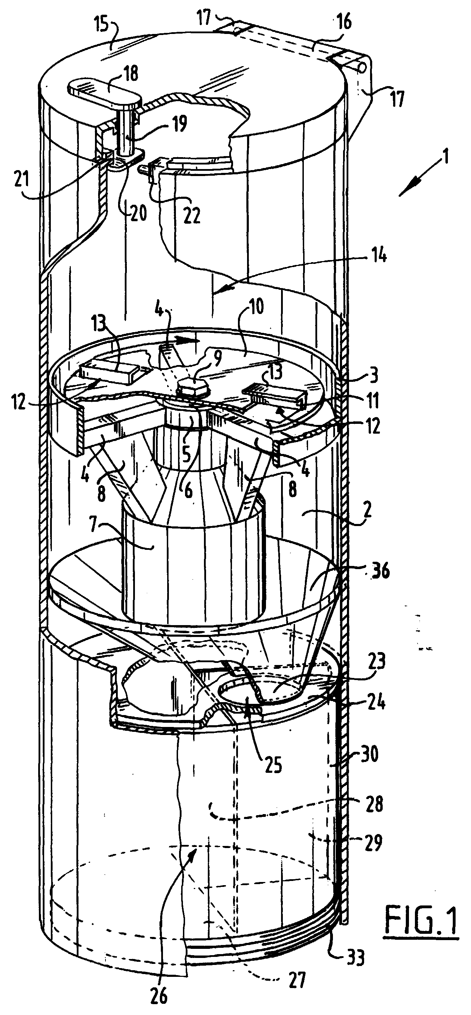

figure 1 shows a partly broken-away perspective view of a first embodiment of the apparatus according to the invention;
figure 2 is a partly broken-away perspective detail view of an alternative embodiment of the apparatus according to the invention.

The glass crushing apparatus 1 according to the present invention essentially comprises a cylinder surface-like housing 2 in which the diverse components are arranged. The housing is preferably manufactured from plastic. In respect of sound-damping during operation of the apparatus a jacket of insulating material, for instance expanded polystyrene, is arranged around the housing. A plastic skin is for instance arranged around the jacket. The housing is preferably manufactured from for instance three identical parts separated by vertical surfaces. This simplifies production.

The crushing element, which forms a component which is individually mounted, essentially comprises a ring 3 which is preferably manufactured from hard material such as a metal which can withstand glass fragments moving at high radial speed. Three spoke-like elements 4 extend from ring 3 toward the centre as far as a small ring 5 in which a bearing 6 is placed for additional rotation mounting of the shaft of a motor 7. This latter, which is of course formed by an electric motor, is connected by means of arms 8 to the three spoke-like elements 4.

A disc 10 is mounted on the motor shaft by means of a bolt 9. The disc is manufactured from a wear-resistant material, for instance steel, and the disc is provided with punched-out pieces 11 which are bent along a bending seam 12. The punched-out pieces 11 are further provided in the middle with a second bending seam 13. Breaking elements are hereby obtained which grip and shatter a piece of glass present above the disc when disc 10 is driven in rotation.

In order to increase the hardness and resistance to wear it is possible to weld a layer of extra-hard material on the impact edge of the breaking elements.

The disc is preferably not balanced; a vibration of the object for crushing is hereby obtained which enhances the crushing process, particularly at the beginning of the process when an undamaged object must be gripped.

When the glass is thus crushed, it will be driven outward at a rather high speed by the velocity of the disc and the punched-out pieces 11 arranged thereon, whereby ring 3 is subject to severe wear. This latter is therefore embodied in wear-resistant material. Ring 3 simultaneously serves for mounting of the thus described apparatus in housing 2. A glue connection can for instance be applied for this purpose, although it is equally possible to combine this with a collar (not shown in the drawing) arranged on the inner side of the housing. It is also possible to make the house divisible at the position of ring 3 and to enable mutual fastening of the thus created housing parts by means of for instance a screw thread. Both parts can then be provided with a collar enclosing the ring.

The space above disc 10 forms a chamber 14 in which the piece of glass for crushing must be arranged for the purpose of crushing. In order to prevent the user being injured by the operation of disc 10 a cover 15 is arranged on the top side of this chamber and on the top of housing 2. Cover 15 is hingedly mounted by means of a shaft 16 into two brackets 17 formed on housing 2. For securing of the cover use is made of a lock formed by a lever 18 which extends through cover 15 by means of a shaft 19 and which is connected to the actual lock 20. This latter herein engages under a collar 21 formed on the upper edge of the housing. A switch 22 is also arranged in the vicinity which can be actuated by the lock so that when lock 20 is closed switch 22 is depressed and motor 7 can be switched on. This prevents the motor being switched on when the cover is open.

A funnel 36 is arranged under disc 10 and the motor driving this latter. Funnel 36 can be mounted in housing 2 in the same manner as ring 3. Outlet opening 23 of the funnel is placed out-of-centre in relation to housing 2. Arranged in the plane of funnel opening 23 is a disc 24 in which at the position of outlet opening 23 a corresponding opening 25 is arranged. A receiving container 26 is placed under plate 24. Receiving container 26 comprises a base 27, a partition 28 extending through the centre of the container and a partition 29 extending from the centre to one side. The container is further provided with an outer wall 30. The thus formed container comprises three compartments in which the fragments of green glass, brown glass and clear glass can be collected, so that these glass types can be transported separately to the glass container. The largest compartment will herein generally be chosen for the transparent glass and the smaller compartments for the two types of coloured glass.

It is of course also possible to make use of a container with a single receiving compartment which is only suitable for a single colour. When glass of another colour is crushed use must be made of a different container.

In order to enable integral removal of container 26, the base 33 is arranged removably for closing the container. A switch can herein also be used, as in the case of the cover, as a motor security device.

Depending on the type of glass for crushing, it is possible herein to rotate funnel 36 together with plate 24 or to rotate container 26.

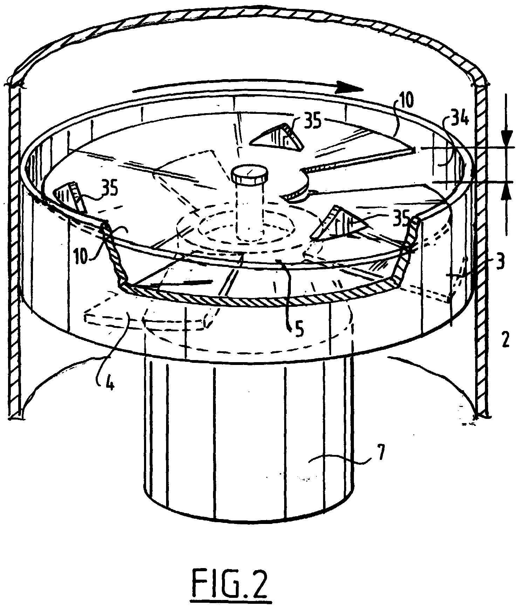

Finally, figure 2 shows an alternative form of disc 10. Disc 10 is herein provided with an incision 34, whereafter disc 10 is deformed so that a vertical slit is created at the position of incision 34 and the periphery of the disc extends helically. In this embodiment breaking elements are also arranged, these in the form of triangular pieces of metal 35 which are fixed onto disc 10 for instance by welding, soldering or glueing. The present case shows triangular elements; it will be apparent that there are countless other options herefor.

The disc shown in this embodiment extends with a small gap as far as wall 2. The glass fragments can be discharged through slit 34, thereby resulting in a certain degree of filtering. It is otherwise also possible in this embodiment to give the disc a smaller diameter.

It will be apparent that it is possible to vary from the shown embodiment in diverse ways and that combinations of the diverse embodiments can be applied.

## Claims

1. Apparatus for crushing glass, comprising:
- a chamber closable with a cover for enclosing the piece of glass for crushing; and
- a rotatable crushing element arranged in the chamber,
**characterized in that**
- the chamber is substantially cylindrical;
- the crushing element comprises a disc which is provided with protrusions and the main surface of which extends substantially transversely of the axis of the chamber;
- the disc is placed on a motor shaft of a motor extending parallel to the axis of the chamber; and
- the chamber and the motor are accommodated in a substantially cylindrical housing, the axis of which extends substantially parallel to the axis of the chamber.

2. Apparatus as claimed in claim 1,
**characterized in that** the motor is fixed to a support with which the motor is fixed in the housing, which support is provided with a bearing for rotation mounting of the motor shaft.

3. Apparatus as claimed in claim 2,
**characterized in that** the support comprises an annular element which is connected to the bearing by means of radially extending spoke elements, and that the motor is connected by means of arms to the spoke elements.

4. Apparatus as claimed in claim 3,
**characterized in that** the annular element is manufactured from a material which can withstand glass splinters moving at high speed.

5. Apparatus as claimed in any of the foregoing claims, **characterized in that** the protrusions of the disc are formed by bent pieces punched out of the disc.

6. Apparatus as claimed in claim 5,
**characterized in that** the bent pieces are rectangular and are angled as seen in tangential section.

7. Apparatus as claimed in claim 5,
**characterized in that** the bent pieces are triangular.

8. Apparatus as claimed in any of the foregoing claims, **characterized in that** the disc is provided with a substantially radial incision and the periphery of the disc extends substantially helically.

9. Apparatus as claimed in any of the foregoing claims, **characterized in that** the disc is unbalanced.

10. Apparatus as claimed in any of the foregoing claims, **characterized in that** a funnel is arranged under the motor to guide the formed glass splinters into a container placed under the funnel.

11. Apparatus as claimed in claim 10, **characterized in that** the outlet opening of the funnel is displaceable to a position above different containers.

12. Apparatus as claimed in claim 10 or 11, **characterized in that** the funnel has an out-of-centre outlet opening, that an assembly of at least two receiving containers is placed under the funnel and that the funnel or the assembly of receiving containers is arranged rotatably in the housing.

13. Apparatus as claimed in claim 12,
**characterized in that** the assembly of receiving containers is arranged in the housing.

14. Apparatus as claimed in any of the foregoing claims, **characterized in that** the closure of the space for the at least one receiving container is connected to a switch for switching on the motor.

15. Apparatus as claimed in any of the foregoing claims, **characterized in that** the closure of the cover is connected to a switch for switching on the motor.
